# EUROPEAN PATENT APPLICATION

(11) **EP 3 904 298 A1**
(43) Date of publication of application: **03.11.2021**
(21) Application number: 21174701.9
(22) Date of filing: 21.04.2010
(51) Int. Cl.: C02F 5/00, C02F 1/52, C02F 5/02, C02F 5/10, C02F 1/42

(54) **CATALYTIC WATER TREATMENT METHOD AND APPARATUS**

(30) Priority: 21.04.2009 US 171145 P; 16.11.2009 US 261610 P
(62) Divisional of application: 10766731.3
(71) Applicant: Ecolab USA Inc., St. Paul, MN 55102 (US)
(72) Inventor: MONSRUD, Lee J., Inver Grove Heights, MN 55076 (US); PRIDEAUX, Douglas J., Eden Prairie, MN 55346 (US); OLSON, Keith E., Apple Valley, MN 55124 (US); SMITH, Kim R., Woodbury, MN 55125 (US); SCHACHT, Paul R., Oakdale, MN 55128 (US); SCHMIDT, Eric V., Woodbury, MN 55125 (US)
(74) Representative: Godemeyer Blum Lenze Patentanwälte Partnerschaft mbB - werkpatent

(57) **Abstract**

The present invention relates to methods, apparatuses, and systems for treating water. The methods, apparatuses and systems reduce solubilized water hardness using various water treatment agents bound to a supporting material. The present invention also includes methods of employing treated water, for example, in cleaning or food processing applications.

## Description

### FIELD

The present invention relates to methods and devices for treating an aqueous system, i.e.. a water source or stream. In particular, the present invention provides methods and devices for reducing solubilized water hardness using various water treatment agents bound to a supporting material. Methods for inhibiting or reducing scale formation are also provided. The present invention also relates to methods of employing treated water, for example, in cleaning processes.

### BACKGROUND

The level of hardness in water can have a deleterious effect in many systems. For example, when hard water alone, or in conjunction with cleaning compositions. contacts a surface, it can cause precipitation of hard water scale on the contacted surface. In general, hard water refers to water having a total level of calcium and magnesium ions in excess of about 100 ppm expressed in units of ppm calcium carbonate. Often, the molar ratio of calcium to magnesium in hard water is about 2:1 or about 3:2. Although most locations have hard water, water hardness tends to vary from one location to another.

Water hardness has been addressed in a number of ways. One method currently used to soften water is via ion exchange, e.g.. by exchanging the calcium and magnesium ions in the water with sodium associated with a resin bed in a water softening unit. The calcium and magnesium adhere to a resin in the softener. When the resin becomes saturated it is necessary to regenerate it using large amounts of sodium chloride dissolved in water. The sodium displaces the calcium and magnesium, which is flushed out in a briny solution along with the chloride from the added sodium chloride. When water softeners regenerate they produce a waste stream that contains significant amounts of chloride, and salts including sodium. calcium and magnesium salts, creating a burden on the system, e.g., sewer system, in which they are disposed of, including a multitude of downstream water re-use applications like potable water usages and agriculture. Further, traditional water softeners add to the salt content in discharge surface waters, which has become an environmental issue in certain locations. Therefore a method to handle water hardness without the use of large amounts of sodium chloride is needed.

Hard water is also known to reduce the efficacy of detergents, for example, by forming films on surfaces, and reacting with detergent components making the detergent less functional in the cleaning process. One method for counteracting this includes adding chelating agents or sequestrants into detersive compositions that are intended to be mixed with hard water in an amount sufficient to handle the hardness. In several instances, chelators and sequestrants (e.g., phosphates and NTA) have been found to cause environmental or health issues. However, in many instances the water hardness exceeds the chelating capacity of the composition. As a result, free calcium ions may be available to attack active components of the composition, to cause corrosion or precipitation, or to cause other deleterious effects, such as poor cleaning effectiveness or lime scale build up.

### SUMMARY

In some aspects, the present invention provides an apparatus for treating water. The apparatus includes: an inlet for providing the water source to a treatment reservoir. One or more catalysts are positioned inside the treatment reservoir. The catalysts comprise a water treatment agent bound to a supporting material. The water treatment agent is selected from the group consisting of a source of magnesium ions, aluminum ions, zinc ions, titanium ions and mixtures thereof. The apparatus also includes an outlet for providing treated water from the reservoir.

In some embodiments, the apparatus is Located in a washing system, For example, in some embodiments, the apparatus is located in an automatic washing system selected from the group consisting of an automatic ware washing or dish washing machine, automatic vehicle washing system, an instrument washer, clean in place system, food processing cleaning system, bottle washer, an automatic laundry washing machine, and combinations thereof. The apparatus can be located upstream from the water line feeding a washing machine in some embodiments.

In other aspects, the present invention relates to a method of treating a water source. The method includes contacting the water source with a catalyst. The catalyst comprises a water treatment agent bound to a supporting material, wherein the water treatment agent is selected from the group consisting of a source of magnesium ions, aluminum inns, zinc ions, titanium ions and mixtures thereof, such that the water is treated. In some embodiments, the treated water has a substantially reduced solubilized water hardness. In some embodiments, the step of contacting can include passing the water source through the catalyst.

In other aspects, the present invention relates to a method of treating a water source. The method includes contacting the water source with a catalyst. The catalyst comprises a water treatment agent bound to a supporting material, wherein the water treatment agent is selected from the group consisting of a source of magnesium ions, aluminum ions, zinc ions, titanium ions and mixtures thereof, such that the water is treated. In some embodiments, the treated water has a substantially reduced solubilized water hardness. In some embodiments, the step of contacting can include passing the water source through the catalyst. In other aspects, the present invention relates to methods of using a treated water source to clean an article. The method comprises treating a water source with a catalyst. The catalyst comprises a water treatment agent bound to a supporting material, wherein the water treatment agent is selected from the group consisting of a source of magnesium ions, aluminum ions, zinc ions, titanium ions and mixtures thereof. A use solution is formed with the treated water and a detergent; and contacting the article with the use solution such that the article is cleaned.

In still yet other aspects, the present invention relates to methods for treating a food processing stream. The method comprises contacting the food processing stream with a catalyst. The catalyst comprises a water treatment agent bound to a supporting material, wherein the water treatment agent comprises a source of magnesium ions, such that the food processing stream is treated.

### Aspects of the invention

1. An apparatus for treating a water source comprising: an inlet for providing the water source to a treatment reservoir; one or more catalysts positioned inside the treatment reservoir, the catalyst comprising a water treatment agent bound to a supporting material, wherein the water treatment agent is selected from the group consisting of a source of magnesium ions, aluminum ions, zinc ions, titanium ions and mixtures thereof; and an outlet for providing treated water from the reservoir. 2. The apparatus of 1, wherein the supporting material comprises an ionic resin.
3. The apparatus of 2, wherein the resin comprises a weak acid cation resin.
4. The apparatus of 1 , wherein the water treatment agent comprises magnesium. 5. The apparatus of 1, wherein the supporting material comprises beads of resin.
6. The apparatus of 1, wherein the catalyst is agitated.
7. The apparatus of 1, wherein the treatment reservoir comprises a removable cartridge.
8. The apparatus of 1, wherein the supporting material is selected from the group consisting of an acrylic acid polymer, a methacrylic acid polymer, and combinations thereof.
9. The apparatus of 1, wherein the supporting material comprises a carboxylic acid polymer.
10. The apparatus of 1, wherein the water treatment agent is ionically bound to the supporting material.
11. The apparatus of 1 , wherein the supporting material is a resin that binds magnesium ions preferentially over calcium ions.
12. The apparatus of 1, wherein the treatment reservoir further comprises one or more metal oxides or hydroxides.
13. The apparatus of 12, wherein the metal oxide is selected from magnesium oxides, aluminum oxides, titanium oxides or mixtures thereof. 14. The apparatus of 1, wherein the apparatus is located in a washing system.
15. The apparatus of 14, wherein the washing system is an automated washing system.
16. The apparatus of 14, wherein the automated washing system is selected from the group consisting of an automatic ware washing machine, automatic vehicle washing system, an instrument washer, clean in place system, food processing cleaning system, bottle washer, an automatic laundry washing machine, and combinations thereof.
17. The apparatus of 1, wherein the apparatus is located upstream on a water line feeding a washing machine.
18. The apparatus of 17, wherein the washing machine is an automatic washing machine selected from the group consisting of an automatic ware washing machine, automatic vehicle washing system, instrument washer, clean in place system, food processing cleaning system, bottle washer, an automatic laundry washing machine, and combinations thereof.
19. The apparatus of 1, wherein the treated water from the outlet does not need to be filtered prior to use. 20. A method of treating a water source comprising: contacting the water source with a catalyst, the catalyst comprising a water treatment agent bound to a supporting material, wherein the water treatment agent is selected from the group consisting of a source of magnesium ions, aluminum ions, zinc ions, titanium ions and mixtures thereof, such that the water is treated.
21. The method of 20, wherein the treated water has a substantially reduced solubilized water hardness.
22. The method of 20, wherein the step of contacting comprises passing the water source through the catalyst. 23. The method of 20, further comprising agitating the catalyst.
24. The method of 20, wherein the supporting material is an ionic resin.
25. The method of 24, wherein the supporting material is a weak acid cation resin.
26. The method of 20, wherein the water treatment agent comprises magnesium.
27. The method of 20, wherein the supporting material comprises beads of resin.
28. The method of 20, wherein the supporting material is selected from the group consisting of an acrylic acid polymer, a methacrylic acid polymer, and combinations thereof.
29. The method of 20, wherein the catalyst is contained in a treatment reservoir.
30. The method of 29, wherein the treatment reservoir comprises a removable cartridge.
31. The method of 20, wherein the water to be treated is at a temperature of between about 10 0 C and about 90 0 C. 32. The method of 20, wherein the water to be treated has a pH of between about 6 and about 8.
33. The method of 20, wherein the water to be treated has a pH of greater than 8.
34. The method of 20, wherein the treated water does not need to be filtered after treatment.
35. The method of 20, wherein the treated water does not have a substantially reduced water hardness level after treatment.
36. The method of 20, wherein the pH of the treated water is substantially similar to the pH of the water source prior to treatment. 37. The method of 20, wherein the catalyst further comprises one or more oxides or hydroxides of magnesium, aluminum or titanium not bound to the supporting material.
38. The method of 20, wherein the water contacted with the catalyst forms a precipitate comprising a cation different than the water treatment agent.
39. A method of using a treated water source to clean an article, the method comprising: treating a water source with a catalyst, the catalyst comprising a water treatment agent bound to a supporting material, wherein the water treatment agent is selected from the group consisting of a source of magnesium ions, aluminum ions, zinc ions, titanium ions and mixtures thereof; forming a use solution with the treated water and a detergent; and contacting the article with the use solution such that the article is cleaned.
40. The method of 39, wherein the catalyst further comprises one or more oxides or hydroxides of magnesium, aluminum or titanium.
41. The method of 39, wherein the detergent is substantially free of a chelant, builder, threshold agent, sequestrant or combinations thereof.
42. The method of 39, wherein the step of contacting the article with the use solution is performed in an automatic washing machine selected from the group consisting of an automatic ware washing machine, automatic dishwashing vehicle washing system, instrument washer, clean in place system, food processing cleaning system, bottle washer, and an automatic laundry washing machine.
43. A method for treating a food processing stream comprising: contacting the food processing stream with a catalyst, the catalyst comprising a water treatment agent bound to a supporting material, wherein the water treatment agent comprises a source of magnesium ions, such that the food processing stream is treated.
44. The method of 43, wherein the supporting material comprises a resin.
45. The method of 44, wherein the resin comprises a weak acid cation resin.
46. The method of 43, wherein the step of contacting comprises passing the food processing stream through the catalyst. 47. The method of 43, wherein the food processing stream comprises a whey permeate.
48. The method of 43, further comprising concentrating the treated food processing stream.
49. The method of 48, wherein the step of concentrating the food processing stream is selected from the group consisting of passing the treated food processing stream through a reverse osmosis system, passing the treated food processing stream through a nanofiltration system, passing the treated food processing stream through an ultrafiltration system, passing the treated food processing stream through an evaporator, and combinations thereof.

### BRIEF DESCRIPTION OF THE DRAWINGS

Figure 1 is a schematic view of an apparatus for use in treating water according to embodiments of the invention.
Figure 2 is a photograph of test glasses washed in water which was treated to reduce solubilized water harness according to embodiments of the invention. Figure 3A is a photograph of test glasses washed in detergent without builders and rinse aids with untreated water.
Figure 3B is a photograph of test glasses washed in detergent with without builders and rinse aids and with water treated to reduce solubilized water hardness according to embodiments of the invention
Figure 3C is a photograph of test glasses washed in detergent with builders and rinse aids and with untreated water.
Figure 3D is a photograph of test glasses washed in detergent with builders and rinse aids and with water treated to reduce solubilized water hardness according to embodiments of the invention.
Figures 4A and 4B are photographs of test glasses washed with untreated water, water treated with a calcium bound resin, water treated with a magnesium bound resin, and water treated with a hydrogen bound resin.

### DESCRPTION

The present invention relates to apparatuses and methods for treating water, such that the solubilized water hardness is controlled and/or reduced. In some embodiments, the solubilized calcium portion of water hardness is reduced. In some aspects, a water treatment agent is bound to a resin and is used to treat the water. In some embodiments, the water treatment agent is magnesium and the resin is a weak acid cation resin.

The water treated in accordance with the methods of the present invention has many beneficial effects, including, but not limited to, reduction of scale and soiling in areas where hard water can cause soiling, protecting equipment, e.g., industrial equipment, from scale build up, increased cleaning efficacy when used with conventional detersive compositions, and reducing the need for specific chemistries, e.g.. those containing threshold agents, chelating agents, or sequestrants, or phosphorous, in downstream cleaning processes.

In some aspects, the present invention provides methods for treating water. In some embodiments, the solubilized calcium portion of water hardness is reduced In some embodiments, the water is contacted with a catalyst including a water treatment agent. In other aspects, the present invention provides methods for inhibiting or reducing scale formation in an aqueous system including contacting the aqueous system with a catalyst including one or more water treatment agents bound to a support material and/or one or more unbound conversion agents.

So that the invention may be more readily understood certain terms are first defined.

As used herein, the terms "builder." "chelating agent." and "sequestrant" refer to a compound that forms a complex (soluble or not) with water hardness ions (from the wash water, soil and substrates being washed) in a specific molar ratio. Chelating agents that can form a water soluble complex include sodium tripolyphosphate, EDTA. DTPA. NTA, citrate, and the like. Sequestrants that can form an insoluble complex include sodium triphosphate, zeolite A, and the like. As used herein, the terms "builder," "chelating agent," and "sequestrant" are synonymous.

As used herein, the term "free of chelating agent" or "substantially free of chelating agent" refers to a composition, mixture, or ingredients that does not contain a chelating agent, builder, or sequestrant or to which only a limited amount of a chelating agent, builder, or sequestrant has been added. Should a chelating agent, builder, or sequestrant he present, the amount of a chelating agent, builder, or sequestrant shall be less than about 7 wt%. In some embodiments, such an amount of a chelating agent, builder, or sequestrant is less than about 2 wt%, less then about 0.5 wt%, or less than about 0.1 wt%.

As used herein, the term "lacking an effective amount of chelating agent" refers to a composition, mixture, or ingredients that contains too little chelating agent, builder, or sequestrant to measurably affect the hardness of water.

As used herein, the term "solubilized water hardness" refers to hardness minerals dissolved in ionic form in an aqueous system or source, i.e.. Ca⁺⁺ and Mg⁺⁺. Solubilized water hardness does not refer to hardness ions when they are in a precipitated state, i.e.. when the solubility limit of the various compounds of calcium and magnesium in water is exceeded and those compounds precipitate as various salts such as, for example, calcium carbonate and magnesium carbonate.

As used herein, the term "water soluble" refers to a compound that can be dissolved in water at a concentration of more than 1 wt-%.

As used herein, the terms "slightly soluble" or "slightly water soluble" refer to a compound that can be dissolved in water only to a concentration of 0.1 to 1.0 wt-%.

As used herein, the term "substantially water insoluble" or "water insoluble" refers to a compound that can be dissolved in water only to a concentration of less than 0.1 wt-%. For example, magnesium oxide is considered to be insoluble as it has a water solubility (wt %) of about 0.00062 in cold water, and about 0.00860 in hot water. Other insoluble compounds for use with the methods of the present invention include, for example: magnesium hydroxide with a water solubility of 0.00090 in cold water and 0.00400 in hot water: aragonite with a water solubility of 0.00153 in cold water and 0.00190 in hot water: and calcite with a water solubility of 0.00140 in cold water and 0.00180 in hot water.

As used herein, the term "threshold agent" refers to a compound that inhibits crystallization of water hardness ions from solution, but that need not form a specific complex with the water hardness ion. This distinguishes a threshold agent from a chelating agent or sequestrant. Threshold agents include a polyacrylate, a polymethacrylate, an olefin/maleic copolymer, and the like.

As used herein, the term "free of threshold agent" or "substantially free of threshold agent" refers to a composition, mixture, or ingredient that does not contain a threshold agent or to which only a limited amount of a threshold agent has been added. Should a threshold agent be present, the amount of a threshold agent shall be less than about 7 wt%. In some embodiments, such an amount of a threshold agent is less than about 2 wt-%. In other embodiments, such an amount of a threshold agent is less then about 0.5 wt-%. In still yet other embodiments, such an amount of a threshold agent is less than about 0.1 wt-%.

As used herein, the term "antiredeposition agent" refers to a compound that helps keep a soil composition suspended in water instead of redepositing onto the object being cleaned.

As used herein, the term "phosphate-free" or "substantially phosphate-free" refers to a composition, mixture, or ingredient that does not contain a phosphate or phosphate-containing compound or to which a phosphate or phosphate-containing compound has not been added. Should a phosphate or phosphate-containing compound be present through contamination of a phosphate-free composition, mixture, or ingredients, the amount of phosphate shall be less than about 1.0 wt%. In some embodiments, the amount of phosphate is less than about 0.5 wt %. In other embodiments, the amount of phosphate is less then about 0.1 wt%. In still yet other embodiments, the amount of phosphate is less than about 0.01 wt %.

As used herein, the term "phosphorus-free" or "substantially phosphorus-free" refers to a composition, mixture, or ingredient that does not contain phosphorus or a phosphorus-containing compound or to which phosphorus or a phosphorus-containing compound has not been added. Should phosphorus or a phosphorus-containing compound he present through contamination of a phosphorus-free composition, mixture, or ingredients, the amount of phosphorus shall be less than about 1.0wt%. In some embodiments, the amount of phosphorous is less than about 0.5 wt %. In other embodiments, the amount of phosphorus is less than about 0.1 wt%. In still yet other embodiments, the amount of phosphorus is less than about 0.01 wt %.

"Cleaning" means to perform or aid in soil removal, bleaching, microbial population reduction, or combination thereof.

As used herein, the term "ware" refers to items such as eating and cooking utensils and dishes and other hard surfaces such as showers, sinks, toilets, bathtubs, countertops, windows, mirrors, transportation vehicles, and floors. As used herein, the term "warewashing" refers to washing, cleaning, or rinsing ware.

As used herein, the term "hard surface" includes showers, sinks, toilets, bathtubs, countertops, windows, minors, transportation vehicles, floors, and the like.

As used herein, the phrase "health care surface" refers to a surface of an instrument, a device, a cart, a cage, furniture, a structure, a building, or the like that is employed as part of a health care activity. Examples of health care surfaces include surfaces of medical or dental instruments, of medical or dental devices, of autoclaves and sterilizers, of electronic apparatus employed for monitoring patient health, and of floors, walls, or fixtures of structures in which health care occurs. Health care surfaces are found in hospital, surgical, infirmity, birthing, mortuary, and clinical diagnosis rooms. These surfaces can be those typified as "hard surfaces" (such as walls, floors, bed-pans, etc..), or fabric surfaces, e.g.. knit, woven, and non-woven surfaces (such as surgical garments, draperies, bed linens, bandages, etc.,), or patient-care equipment (such as respirators, diagnostic equipment, shunts, body scopes, wheel chairs, beds, etc.,), or surgical and diagnostic equipment. Health care surfaces include articles and surfaces employed in animal health care.

As used herein, the term "instrument" refers to the various medical or dental instruments or devices that can benefit from cleaning using water treated according to the methods of the present invention.

As used herein, the phrases "medical instrument," "dental instrument." "medical device," "dental device." "medical equipment," or "dental equipment" refer to instruments, devices, tools, appliances, apparatus, and equipment used in medicine or dentistry. Such instruments, devices, and equipment can be cold sterilized, soaked or washed and then heat sterilized, or otherwise benefit from cleaning using water treated according to the present invention. These various instruments, devices and equipment include, but are not limited to: diagnostic instruments, trays, pans, holders, racks, forceps, scissors, shears, saws (e.g. bone saws and their blades), hemostats, knives, chisels, rongeurs, files, nippers, drills, drill bits, rasps, burrs, spreaders, breakers, elevators, clamps, needle holders. carriers, clips, hooks, gouges, curettes, retractors, straightener, punches, extractors. scoops, keratomes, spatulas, expressors, trocars, dilators, cages, glassware, tubing, catheters, cannulas, plugs, stents, scopes (e.g.. endoscopes, stethoscopes, and arthoscopes) and related equipment, and the like, or combinations thereof.

As used herein, the term "laundry." refers to woven and non-woven fabrics, and textiles. For example, laundry can include, but is not limited to, clothing, bedding, towels and the like.

As used herein, the term "water source." refers to any source of water that can be used with the methods, systems and apparatus of the present invention. Exemplary water sources suitable for use in the present invention include, but are not limited to, water from a municipal water source, or private water system, e.g.. a public water supply or a well. The water can be city water, well water, water supplied by a municipal water system, water supplied by a private water system, and/or water directly from the system or well. The water can also include water from a used water reservoir, such as a recycle reservoir used for storage of recycled water, a storage tank, or any combination thereof. In some embodiments, the water source is not an industrial process water, e.g.. water produced from a bitumen recovery operation. In other embodiments, the water source is not a waste water stream.

The methods, systems, apparatuses, and compositions of the present invention can include, consist essentially of, or consist of the components and ingredients of the present invention as well as other ingredients described herein. As used herein, "consisting essentially of" means that the methods, systems, apparatuses and compositions may include additional steps, components or ingredients, but only if the additional steps, components or ingredients do not materially alter the basic and novel characteristics of the claimed methods, systems, apparatuses, and compositions.

As used herein, "weight percent," "wt-%." "percent hy weight," "% by weight." and variations thereof refer to the concentration of a substance as the weight of that substance divided by the total weight of the composition and multiplied by 100. It is understood that, as used here. "percent," "%." and the like are intended to be synonymous with "weight percent." "wt-%." etc.

As used herein, the term "about" or "approximately" refers to variation in the numerical quantity that can occur, for example, through typical measuring and liquid handling procedures used for making concentrates or use solutions in the real world: through inadvertent error in these procedures; through differences in the manufacture, source, or purity of the ingredients used to make the compositions or carry out the methods; and the like. The term "about" also encompasses amounts that differ due to different equilibrium conditions for a composition resulting from a particular initial mixture. Whether or not modified by the term "about", the claims include equivalents to the quantities.

It should be noted that, as used in this specification and the appended claims, the singular forms "a," "an." and "the" include plural referents unless the content clearly dictates otherwise. Thus, for example, reference to a composition containing "a compound" includes a composition having two or more compounds. It should also be noted that the term "or" is generally employed in its sense including "and/or" unless the content clearly dictates otherwise.

### Water Hardness/Water sources

In some aspects, the apparatuses and methods of the present invention are used to treat a water source such that the solubilized water hardness in the water source is controlled and/or reduced. The water source treated may be any source of water having a hardness that would be benefited by treatment in accordance with the methods of the present invention. Exemplary water sources suitable for treatment using the methods of the present invention include, but are not limited to, ordinary tap water such as water from a municipal water source, or private water system, e.g.. a public water supply or a well. The water can be city water, well water, water supplied by a municipal water system, water supplied by a private water system, and/or water directly from the system or well. In some embodiments, the water source is not an industrial process water, e.g., water produced from a bitumen recovery operation. In other embodiments, the water source is not a waste water stream.

The apparatus, systems and methods of the present invention include treating a water source such that the solubilized hardness of the water is controlled. In some aspects, the solubilized hardness of the water is reduced. In some aspects, the present invention provides methods for reducing or inhibiting scale formation in an aqueous system.

In some embodiments, an aqueous system, i.e., a water source, is contacted with one or more water treatment agents bound to a resin and/or unbound conversion agents. Without wishing to be bound by any particular theory, it is thought that the water treatment agents cause solubilized calcium water hardness ions in water to substantially precipitate via an interfacial reaction from solution as calcium carbonate in the thermodynamically unfavorable crystal form aragonite rather than as the thermodynamically favorable crystal form calcite. Aragonile is a fragile crystal which doesn't bind well to surfaces and doesn't form hard water scale while calcite is a more robust crystal which binds tightly to surfaces, forming a hard water scale that's not seen with aragonite. Thus, contacting water with a water treatment agent of the present invention reduces the solubilized water hardness of the treated water, and leads to a reduction in scale formation on a surface in contact with the treated water. The aragonite crystals can also act as seed crystals for further reduction of solubilized calcium after contacting the water treatment agent.

The methods of the present invention are especially effective at removing or preventing scale formation wherein the scale includes calcium salts, e.g., calcium phosphate, calcium oxalate, calcium carbonate, calcium bicarbonate or calcium silicate. The scale which is intended to be prevented or removed by the present invention may be formed by any combination of the above-noted ions. For example, the scale may involve a combination of calcium carbonate and calcium bicarbonate.

In some embodiments the water source has a pH of between about 6 and about 11 prior to treatment using the methods, apparatuses, or systems of the present invention. In some embodiments, the pH of the water source prior to treatment is greater than about 8. In some embodiments, the pH of the water source is raised to greater than 9, and in some embodiments the pH is greater than 10 prior to treatment. In some embodiments, the pH of the water source is increased prior to contacting the catalysts, such as by injecting an alkaline chemical into the feedstream or by applying a self-buffering alkali source, such as MgO or calcite, to the water source. In some embodiments, the water source has a pH greater than about 9 prior to treatment with the catalyst and the precipitate does not need to he filtered because the formation of large flocculent forms of precipitant is avoided For example, more than 200ppm sodium carbonate (e.g.. up to about 5.000ppm) may be added to the treated water source, raising the pH above about 10. and the treated water would not need to be filtered.

### Catalyst

Embodiments of the invention include a catalyst including a support medium and a water treatment agent bound to the support medium. The water treatment agent may be ionically bound or physically bound to the support medium. The catalyst may be contained within a treatment reservoir. In some embodiments, the catalyst includes an additional functional ingredient which is not bound to a support medium. In further embodiments, the catalyst includes one or more water treatment agents bound to a support medium and one or more additional functional ingredients which are not bound to a support medium.

As used herein, the term "water treatment agent" refers to a species that causes solubilized calcium in water to substantially precipitate from solution as calcium carbonate in a form which is thought to be the thermodynamically unfavorable crystal form aragonite rather than as the thermodynamically favorable crystal form calcite. Aragonite is a fragile crystal which doesn't bind well to surfaces and doesn't form hard water scale while calcite is a more robust crystal which binds tightly to surfaces, forming a hard water scale that's not seen with aragonite.

Water treatment agents suitable for use with the methods and apparatus of the present invention include sources of magnesium ions, iron ions, aluminum ions. titanium ions, and zinc ions and polymorphs of calcium. In some embodiments, the water treatment agents suitable for use with the methods and apparatus of the present invention do not include aluminum, zinc and/or titanium ions. One or more water treatment agents may be used. In some embodiments, the water treatment agent is selected from the group consisting of sources of magnesium, aluminum, and titanium ions and polymorphs of calcium. In some embodiments, the water treatment agent includes only a source of magnesium ions.

While not intending to be bound by theory, it is believed that the water treatment agents act as catalyst by acting as nuclcation seeds to precipitate calcium carbonate out of the water in the form of aragonite. As such, the water treatment agent does not undergo an ionic exchange which would require recharging of the resin with new water treatment agent, as in existing water treatment systems. Rather, the water treatment agent remains adjoined to the catalyst and continues to promote the precipitation of calcium carbonate over an extended period of time without needing to be replaced for a long time. As aragonite precipitates on the surface of the resin system it promotes further precipitation of aragonite. As the resin column is agitated some of the aragonite crystals are broken off the surface of the resin system and mixed back into the water as precipitated seed crystals. This process reaches a steady state so the rate of crystallization equals the rate of removal from the surface.

Ongoing experiments have shown that the catalyst continues to function after treating 25.000 gallons of water per pound of resin without fail. In practice, the lifespan of the catalyst will depend upon the water conditions and the presence of contaminants in the water. In average water conditions, the catalyst may last 1 or 2 years, while in very good water conditions or in low water usage rates it may last 5 or 10 years. In some embodiments, water contacted with a water treatment agent forms a precipitate which includes a cation which is different from the water Treatment agent. For example, in some embodiments the water treatment agent includes a source of magnesium ions and the precipitate formed includes calcium. In some embodiments, water contacted with a water treatment agent forms a calcium precipitate. The calcium precipitate formed using the methods of the present invention is such that the precipitate (e.g. aragonite crystals) flows through the water source harmlessly. That is, in some embodiments, unlike conventional water treatment systems, there is not a need to filter or remove the precipitate from the treated water.

The catalyst can further include additional functional ingredients. Additional functional ingredients suitable for use with the methods of the present invention include any materials that impart beneficial properties to the catalyst, the water source being treated, or any combination thereof. For example, functional ingredients may be added that aid in the prevention of "cementing" of the catalyst, i.e., agglomeration of the particles, as it is contacted with a water source.

In some embodiments, the catalysts of the present invention further include one or more additional functional ingredients including, but not limited to, metal oxides, metal hydroxides, polymorphs of calcium carbonate (non-Calcite forms) and combinations and mixtures thereof. In some embodiments, the additional ingredient includes one or more metal oxide, such as magnesium oxide, aluminum oxide, and titanium oxide, for example. In some embodiments, the additional functional ingredient includes one or more metal hydroxide, such as magnesium hydroxide. aluminum hydroxide, and titanium hydroxide, for example. Polymorphs of calcium carbonate such as aragonite may also be used in embodiments of the invention.

In some embodiments, the additional functional ingredient used includes a metal oxide and a metal hydroxide in combination, such as magnesium oxide and magnesium hydroxide. The additional ingredients may be in any form, e.g.. solid, particle, liquid, powder, nanoparticle, slurry, suitable for use with the methods of the present invention. In some embodiments, a solid source of an additional functional ingredient is used.

In some embodiments, the catalyst includes a combination of a water treatment agent bound to a support medium and an unbound additional functional ingredient. For example, in one embodiment, the catalyst includes magnesium bound to a support medium as well as unbound additional ingredient such as magnesium oxide and/or magnesium hydroxide. In some embodiments, the bound water treatment agent and unbound additional ingredient are physically present together, such as mixed together in the same treatment reservoir or as separate layers in the same treatment reservoir. In other embodiments, the bound water treatment agent and the unbound additional ingredient are separate, such as in different treatment reservoirs operating in series.

In some embodiments, the additional functional ingredient includes a mixed cation compound of calcium and magnesium ions. In some embodiments, the additional functional material includes calcium magnesium carbonate, some natural minerals of which may also be known by the name dolomite. In some embodiments, one or more additional functional ingredients are bound to the supporting material.

### Supporting Material

In some aspects, the catalysis for use with the present invention include a supporting material. The supporting material may be any material to which a water treatment agent can be bound. In some embodiments, the catalysts includes more than one different supporting material.

In some embodiments, the supporting material has a density slightly higher than the density of water to maximize fluidization and/or agitation of the supporting material. In some embodiments, the supporting material binds cations by ionic or electrostatic force. In some embodiments, the bound cation is magnesium. In some embodiments, the supporting material is inert.

In some embodiments, the water treatment agent includes a resin. In some embodiments, the supporting material is a resin capable of binding magnesium ions preferentially over binding calcium ions. The resin for use as a supporting material can include any ion exchange resin. For example, in some embodiments, the resin includes an acid cation exchange resin, e.g.. a weak acid cation exchange resin, or a strong acid cation exchange resin. In other embodiments, the supporting material is a chelating resin.

In some embodiments, the resin includes an acrylic acid polymer or methacrylic acid polymer. In some embodiments, the supporting material is not inorganic. In some embodiments, the supporting material comprises a polymer having sulfonic acid substituents. For example, in some embodiments, the supporting material does not include a ceramic material, and/or zeolites.

The supporting material may be provided in any shape and size, including beads, sheets, rods, disks or combinations of more than one shape.

The water treatment agent may be bound to the support material in a variety of ways. For example, the resin may be loaded with the magnesium resin by an ion exchange mechanism. In a two-step process, the hydrogen on an acid resin is first exchanged with sodium and then finally exchanged with the final cation using the salt of the water treatment agent. For example, in some embodiments, a magnesium bound resin catalyst may he created from a weak acid cation exchange resin having a H+ ion attached to the active sites, such as carboxylic acid groups. The weak acid cation exchange resin can be first converted to a sodium form, such as by soaking the resin in an excess of sodium hydroxide for 4 to 12 hours and then rinsing with water, and then the sodium form may be converted to a magnesium form, such as by using soluble magnesium salts, such as MgCl₂ and MgSO₄, for example.

Alternatively, the water treatment agent may be bound to the supporting material using a one-step process. In some embodiments, the magnesium may be directly exchanged with the hydrogen on the surface of an acid resin. For example, the resin may be soaked in an excess of magnesium salt, such as MgCl₂ or MgSO₄, for a sufficient time such as 4 to 12 hours, and then rinsed with water. Soluble magnesium salts which may be used include magnesium chloride, magnesium sulfate, for example. In other embodiments, the weak acid cation exchange resin may be converted to a magnesium form using a low solubility magnesium source, such as magnesium hydroxide, magnesium oxide, for example. For example. MgO can be added to an apparatus containing a resin and either mixed with the resin, or used as a separate pre-conditioning stage of the apparatus. In some embodiments, magnesium is bound to the supporting material using the one-step process using MgO or MgOH. and some residual MgO or MgOH remain on the surface where they may enhance the water treatment activity of the catalyst.

In other embodiments, the resin includes a weak acid cation exchange resin having H+ ions attached to the active sites. The resin may then he neutralized by having a water source run over it. Without wishing to be bound by any particular theory, it is thought that as the water runs over the resin, the calcium and magnesium ions in the water will attach to the resin, thereby neutralizing it.

Similar two step or one step processes could be used to bind other water treatment agents such as aluminum, titanium, zinc, and polymorphs of calcium, to the supporting material.

In some embodiments, a layer of a magnesium source may be provided beneath an un-neutralized resin in a treatment reservoir, so that when water Hows through the reservoir, the catalyst is converted to the magnesium form. For example, the reservoir is first filled with the magnesium source (soluble or insoluble). The un-neutra|ized resin is added on top of the magnesium source. When the water starts to flow though the reservoir from the bottom up, it picks up some of the magnesium and this material will react with the resin to form the supported catalyst resin system.

The water treatment agent may be ionically or physically bound to the supporting medium. For example, in some embodiments, Ca2+ or Mg2+ have a loose ionic bond with a weak acid resin substrate, providing a large amount of active surface area as the ions are held loosely in there in ionic form and catalyzing the precipitation of aragonite.

### Treatment reservoir

Embodiments of the invention include one or more treatment reservoirs which contains the catalyst. Embodiments of the invention include a system or apparatus having a single treatment reservoir, one or more treatment reservoirs in parallel and/or one or more treatment reservoirs in series. In embodiments which include more than one treatment reservoir, each treatment reservoir may include the same one or more catalysts or may include different one or more catalysts. For example, the water source may be passed over a plurality of reservoirs, in the same or in separate vessels, including the same or different catalysis, i.e. water treatment agents bound to a supporting material.

The treatment reservoir may be any shape or size appropriate for the use of the water and the volume of water to be treated. In some embodiments, the apparatus includes a vessel which includes a treatment reservoir. The treatment reservoir may be for example, a tank, a cartridge, a filter bed of various physical shapes or sizes, or a column. In some embodiments, the treatment reservoir is pressurized. In other embodiments, the treatment reservoir is not pressurized.

Some embodiments of the invention include a treatment reservoir including a water inlet and a water outlet. In some embodiments, the water may enter and exit the treatment reservoir through the same opening or channel. In some embodiments, the treatment reservoir is contained within a vessel. Water to be treated enters the vessel through an inlet located at or near the top of a vessel, flows downward along the vessel wall or walls, and enters the treatment reservoir at the bottom of the vessel. The water flows upward through the treatment reservoir toward the top of the vessel and exits the vessel through an outlet at or near the top of the vessel.

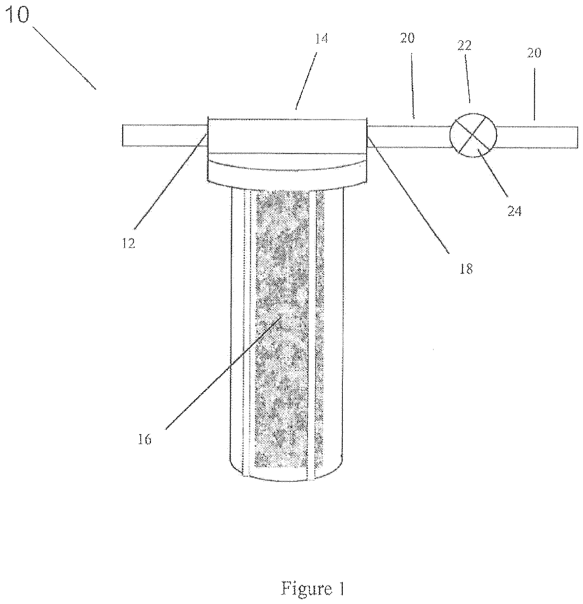

An example of a system for treating water according to embodiments of the invention is shown in FIG. 1. a schematic of an apparatus of the present invention is shown at reference 10. The apparatus includes: an inlet 12 for providing the water source to a treatment reservoir 14; a treatment reservoir 14 including a water treatment agent 16; an outlet 18 for providing treated water from the treatment reservoir: and a treated water delivery line 20. In some embodiments, the treated water delivery line 20 provides water to a selected cleaning device. In some embodiments, there is no filter between the outlet and the treated water delivery line. A flow control device 22 such as a valve 24 can be provided in the treated water delivery line 20 to control the flow of the treated water into the selected end use device. e.g., a warewashing machine, a laundry washing machine.

In some embodiments, the entire treatment reservoir can be removable and replaceable. In other embodiments, the treatment reservoir can be configured such that catalyst contained within the treatment reservoir is removable and replaceable. In some embodiments, the treatment reservoir includes a removable, portable, exchangeable cartridge including a water treatment agent, e.g., magnesium, bound to a supporting material, such as a weak acid resin.

In some aspects, the present invention provides methods for reducing or controlling solubilized water hardness and/or reducing scale formation including contacting a water source with a catalyst including a water treatment agent. The step of contacting can include, but is not limited to, running the water source over or through a solid source, e.g., a column, cartridge, or tank, including the water treatment agent. The contact time is dependent on a variety of factors, including, for example, the pH of the water source, the hardness of the water source, and the temperature of the water source.

In some embodiments, the catalyst is in the form of an agitated bed or column. The bed or column can be agitated by any known method including, for example, by the flow of water through the column, fluidization, mechanical agitation or mixing, high flow backwash, recirculation, air sparge, eductor flow, and combinations thereof. In some embodiments, the catalyst includes a fluidized bed. e.g., a column or a cartridge, in the treatment reservoir. Fluidization is obtained by an increase in the velocity of the fluid, e.g.. water, passing through the bed such that it is in excess of the minimum fluidization velocity of the media.

As the catalyst promotes precipitation of the calcium carbonate, the calcium carbonate may be bound to the catalyst. Therefore, the catalyst, such as the bed or column may be agitated to avoid "cementing." i.e., agglomeration of the catalyst once contacted with the water source. Such agitation may prevent the precipitant from binding to the catalyst and/or may cause precipitated calcium to become dislodged from the catalyst. For example, as the aragonite precipitates on a catalyst, agitation of the catalyst results the beads or granules of the support media, for example, to bounce into each other and/or to bound into the solid unbound conversion agent. The physical impact knocks off the precipitate, such as aragonite crystals. The loose calcium carbonate crystals may then pass through and exit the treatment reservoir along with the treated water. In this way, the agitation of the catalyst causes it to be self-cleaning, exposing the catalyst and enabling it to continue nucleating and precipitating the calcium carbonate from the water source. It has been discovered that the catalyst according to embodiments of the invention can continue to perform excellently on very hard water, such as 17 grain water, even after used to treat water for 900 consecutive dishmachine cycles, with the inside of the dishmachine remaining nearly perfect, whereas untreated was resulted in heavy scale deposits.

The crystals are very small in size, are inert and non-reactive, and do not stick to surfaces. For example, aragonite crystals formed according to embodiments of the invention may be between approximately 10 nm and 1000 nm in size. Because it is inert and small in size, the precipitated calcium carbonate does not need to be filtered or removed from the treated water. Rather, the treated water containing the precipitated crystals of calcium carbonate can be used for any downstream application.

The treatment reservoir may be contained in a vessel which can be small, such as a canister filter-type vessel as used for small drinking purification processes. Alternatively, the vessel can be large, such as a large water treatment tank as used in whole house water softening.

As water passes through the treatment reservoir, the water treatment agent bound resin treats the water by nucleating and precipitating calcium carbonate out of the water. In some embodiments, the flow of water is in the upward direction. For example, in some embodiments, the water enters the treatment reservoir through an inlet in a bottom portion of the reservoir, flows up through the catalyst, and exits the treatment reservoir through an outlet at a top portion of the treatment reservoir.

The treatment reservoir may be sized and shaped to increase the agitation and fluidization of the catalyst as water contacts it. The agitation works to keep the catalyst clean from precipitated calcium carbonate. In some embodiments, the volume of the vessel is minimized, such that it contains only enough water for the application or intended use such that the residence time is not excessively low. This design prevents the water in the reservoir from getting stagnant and reduces the possible risk of bulk precipitation and accumulation of calcium carbonate in the reservoir. In some embodiments, the volume of water in the vessel may be completely evacuated with each use of the water. In some embodiments, the vessel is sized such that there is sufficient head-space (or free-board) above the resin to permit the resin to rise and be agitated as water passes through. In some embodiments, the free-board space is equal to approximately 100% of the volume of the catalyst.

In some embodiments, the catalyst is agitated using fluidization forces to create a flowing bed that is in constant agitation when the water is flowing. In other embodiments, the catalyst is agitated using centrifugal forces created by tangential water flows, mechanical agitation, or ultrasound agitation, for example. The agitation ultimately results in a cleaning of the catalysts, removing the calcium crystals from the catalysts, such that water can continue to flow over or through the media with reduced obstruction.

### Methods of Use

The methods, apparatuses, and systems of the invention may be used for a variety of purposes. For example, an apparatus for employing the water treatment methods of the present invention can be connected to the water main of a house or business. The apparatus can be employed in line before the hot water heater, or after the hot water heater. Thus, an apparatus of the present invention can be used to reduce solubilized water hardness in hot, cold and room temperature water sources. In some embodiments, the water to be treated in accordance with the present invention is at a temperature of between about 10°C and about 90°. In some embodiments, the temperature of the water to be treated is above room temperature, e.g.. greater than about 20°C.

In some aspects, the present invention provides a system for use in a cleaning process. The system includes providing a water source to an apparatus for treating the water source. In some embodiments, the apparatus for treating the water source includes: (i) an inlet for providing the water source to a treatment reservoir: (ii) a treatment reservoir containing a catalyst including a water treatment agent bound to a supporting media and/or an unbound additional functional ingredient; (iii) an outlet for providing treated water from the treatment reservoir: and (iv) a treated water delivery line for providing the treated water to the automatic washing machine, such as a warewashing machine. In some embodiments, a device, e.g., a screen, is present in the treatment reservoir in order to keep the water treatment agent contained within the treatment reservoir as the fluid is passing over or through it. In some embodiments, the apparatus is filterless, with no filter between the outlet and the treated water delivery line.

Once the water has been treated, the treated water is provided to an automatic washing machine, e.g.. an automatic ware washing or dishwashing machine, a vehicle washing system, an instrument washer, a clean in place system, a food processing cleaning system, a bottle washer, and an automatic laundry washing machine, from the treated water delivery line of the apparatus. Alternatively, the treated water may be used in a manual washing system. Any automatic or manual washing machine that would benefit from the use of water treated in accordance with the methods of the present invention can be used. The treated water is then combined with a detersive composition in the washing machine to provide a use composition. Any detersive composition can be used in the system of the present invention, for example, a cleaning composition, a rinse agent composition or a drying agent composition. The articles to be cleaned are then contacted with the use solution in the automatic washing machine such that they are cleaned.

The water treatment methods and systems of the present invention can be used in a variety of industrial and domestic applications. The water treatment methods and systems can be employed in a residential setting or in a commercial setting, e.g., in a restaurant, hotel, hospital. For example, a water treatment method, system, or apparatus of the present invention can be used in: ware washing applications, e.g., washing eating and cooking utensils and other hard surfaces such as showers, sinks, toilets, bathtubs, countertops, windows, mirrors, and floors: in laundry applications, e.g., to treat water used in an automatic textile washing machine at the pre-treatment, washing, souring, softening, and/or rinsing stages: in vehicle care applications, e.g., to treat water used for pre-rinsing, e.g., an alkaline presoak and/or low pH presoak, washing, polishing, and rinsing a vehicle; industrial applications, e.g.. cooling towers, boilers, industrial equipment including heat exchangers; in food service applications, e.g.. to treat water lines for coffee and tea brewers, espresso machines, ice machines, pasta cookers, water heaters, steamers and/or proofers; in healthcare instrument care applications, e.g., soaking, cleaning, and/or rinsing surgical instruments, treating feedwater to autoclave sterilizers; and in feedwater for various applications such as humidifiers, hot tubs, and swimming pools.

In some embodiments, the water treatment methods and systems of the present invention can be applied at the point of use. That is, a water treatment method, system, or apparatus of the present invention can be applied to a water source upstream of an application such as a washing system. In some embodiments, the water treatment is applied immediately prior to the desired end use of the water source. For example, an apparatus of the present invention could be employed to a water line connected to a household or restaurant appliance, e.g.. a coffee maker, an espresso machine, an ice machine. An apparatus employing the methods of the present invention may be located in a washing system, For example, it can also be included as part of an appliance which uses a water source, e.g.. a water treatment system built into an automatic or manual washing system, a coffee maker, an ice machine, or any other system which may benefit from the use of treated water.

A treatment reservoir according to embodiments of the invention may be used with a washing machine in a variety of ways. In some embodiments, the treatment reservoir may be connected to a detergent dispensing device. The treatment reservoir may be used to supply treated water to a washing system and/or to a rinsing system of a washing machine. In some embodiments, the treatment reservoir may be used to supply a mixture of treated water and detergent to a washing system.

Additionally, an apparatus for employing the water treatment methods of the present invention can be connected to the water main of a house or business. The apparatus can be employed in line before the hot water healer, or after the hot water heater. Thus, an apparatus of the present invention can be used to reduce solubilized water hardness in hot, cold and room temperature water sources.

Because the embodiments of the invention are so useful at removing solubilized hardness from water, treated water may be used with detergents having reduced amounts of builders or that are low in builders. In some embodiments, the treated water may be used with detergents which are substantially free of builders. In some embodiments, the treated water may be used with detergents which are substantially free of chelant, builder, threshold agent, sequestrant or combinations thereof. Besides being economically advantageous, the use of low builder detergents or no builder detergents allowed by embodiments of the invention is also more beneficial to the environment, as is the elimination of the need to regenerate the system such as by using sodium chloride.

The methods, apparatuses, and systems of the present invention may also be used in the food and beverage industry, for example in a food and beverage processing application. In some embodiments, the water treatment apparatuses can be used upstream from a reverse osmosis membrane ("RO membrane"), a nanofiltration system ("NF system"), or an ultrafiltration system ("UF system") (collectively "RO/NF/UF systems") or an evaporator in a food or beverage processing application, e.g.. an application to treat whey permeate.

For example, the methods and apparatuses can be used to prevent calcium scale formation on evaporators and RO/NF/UF systems used to process whey permeate, or other mineral containing feed streams. Whey permeate contains water, lactose and minerals, e.g.. calcium phosphate. The permeate is about 6% lactose and is typically concentrated using RO filtration to reach about 18% solids. The permeate is further concentrated using an evaporator to reach about 65% solids. RO/NF/UF systems are known to be fouled by the mineral, resulting in increased pressure for permeation and/or a decreased flow rate.

During evaporation, the evaporator is fouled by mineral deposits including mostly calcium phosphate scale. This scale reduces heat transfer efficiency which in turn requires an increase in steam and/or a decrease in feed flow rate to maintain the finished solids content. Current scale reducing treatments include adding polyphosphates to the feed stream to minimize scaling, and using large amounts of acid to dissolve and remove the scale from the RO/NF/UF units and evaporators. Using the apparatus, systems or methods of the invention upstream from an RO/NF/UF system or an evaporator may minimize the scaling and increase production efficiency without having to use polyphosphate treatments or treating the evaporator or RO/NF/UF units with a large amount of acid to dissolve the scale.

In some embodiments, the methods and apparatus may also be used to produce and isolate aragonite. Precipitates of aragonite may be removed from the water by filtration, for example, and used for industrial or pharmaceutical purposes.

### EXAMPLES

### Example 1

Three resin samples were prepared by loading them with H+, Ca+, and Mg+. The magnesium loaded sample was prepared according to the following procedure. A weak acid cation resin. Lewatit S 8528 obtained from the Lanxess Company, was soaked in 500 grams of NaOH beads and 2500 ml of softened water for 24 hours. The pH was approximately 12-13. After soaking, the resin was then rinsed thoroughly with softened water three times until the pH of the rinse water was below 11. The resin was soaked in 2500 ml of softened water with 700 grams of a MgCl₂·6H₂0 composition for 4 days.
The resin was thoroughly rinsed with softened water three times. The final pH of the rinse water was approximately 7.5 - 8.5. To load the resin with Ca++, the same procedure was used as the MG++ resin, only the resin was soaked with CaCl₂ composition. The H+ form of the resin, was the resin itself, without any cations loaded onto it.

The magnesium treated resin produced by this method was used in Examples 3 - 5, below.

### Example 2

The following alternative process was used to produce a magnesium form of a weak acid cation exchange resin: Lewatit S 8528 resin was soaked in a 60% magnesium hydroxide slurry for 4 days. The final pH of the rinse water was 11.0.

### Example 3

Two pounds of the magnesium treated resin, produced according to the method of Example 1, was used to treat 17 gpg (grain per gallon) hard water. The two pounds of resin was placed into a flow-through reservoir and connected to the inlet of an institutional dishwashing machine. The treated water was then used to wash test glasses in an AM-14 automatic ware washing machine with no detergent and no rinse-aid. After 1100 cycles using the same water treatment reservoir and resin, the interior of the warewashing machine showed no visible scale.

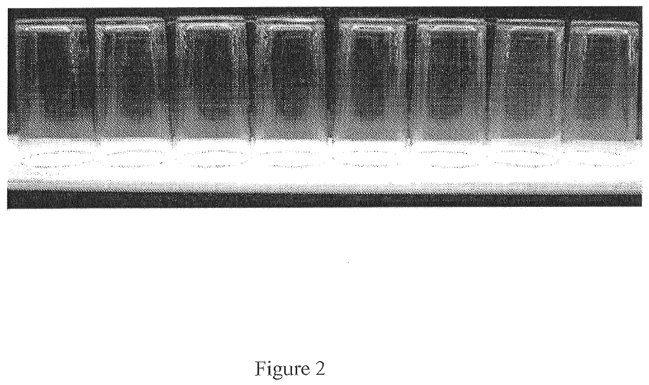

Figure 2 shows a picture of 8 test glasses, each washed in a dishmachine using hard water treated with the magnesium catalyst resin. The first six glasses from the left were removed from the dishmachine after consecutive 100 cycles of the magnesium treated resin and wash cycles of the glass. The sixth glass from the left, after 600 cycles of the magnesium treated media and wash cycles, showed no scale buildup. As can be seen, there was no scale buildup on the glass even after 600 wash/rinse cycles while using the magnesium treated resin. The seventh glass from the left was washed 100 times by the same magnesium treated resin after 800 cycles, and the eighth glass from the left was washed 100 times by the same magnesium treated resin after 900 cycles. As can be seen, even after 900 cycles, there is no scale buildup, indicating that the magnesium resin continued to reduce scaling even after 900 cycles.

### Example 4

Magnesium treated resin, produced according to the method of Example 1, was used to treat 17 Grain water. The water was treated using a flow-through reservoir connected to a hard water tap. The water was run through the reservoir to the drain and thus treated continuously for over 15, 000 gallons. After treating 15,803 gallons of water, the reservoir was connected to an automatic ware washing machine (Type AM-14) for 800 cycles with no detergent or rinse aids. Following the 800 cycles, the interior of the ware washing machine demonstrated no visible scale. As a comparison, untreated 17 Grain water was run through a ware washing machine (type AM-14) for 800 cycles with no detergent or rinse aids. The interior of the ware washing machine showed heavy scale. This indicates that the resin bound magnesium continued to significantly reduce the soluble hardness in the water even after treating 15,803 gallons of water.

### Example 5

Magnesium treated resin, produced according to the method of Example 1, was used to treat 17 Grain water. The treated water was used in an automatic ware washing machine with a detergent to wash test glasses. The detergent was formulated with and without builder according to table 1:

**Table 1**

| **Raw Material** | **Detergent with builder (Approx. WL%)** | **Detergent without builder (Approx. Wt.%)** |
|---|---|---|
| Alkalinity Source | 10% | 10% |
| Builders | 14% | 0.0% |
| Surfactants | 4% | 4% |
| Soda Ash | 67% | 81% |
| Solvent | 2% | 2% |
| Bleaching Agent | 3% | 3% |
| | **100.0%** | **100%** |

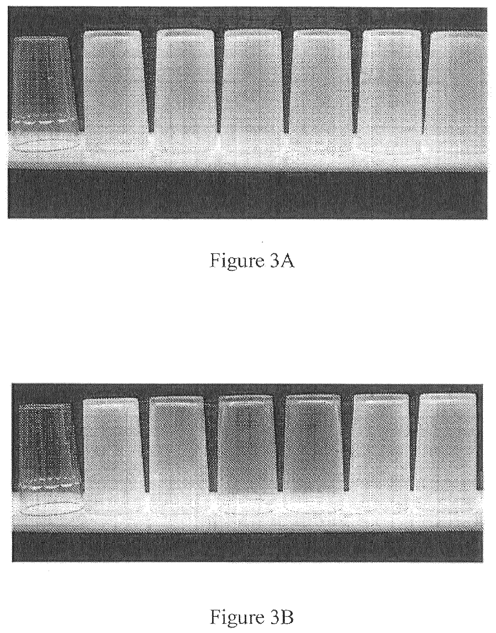

The results of this example are shown in Figures 3A - 3D. In Figure 3A. the glasses were washed with the detergent without builder and without water treatment and show heavy scale. In comparison, in Figure 3B, the glasses were washed with the same detergent without builder and with water treated with magnesium bound resin, produced according to the method of Example 1. These glasses had less scale and looked better than the glasses washed in the untreated water. This indicates that the use of the magnesium bound resin catalyst reduced the need for builder in the detergent, even in 17 Grain water.

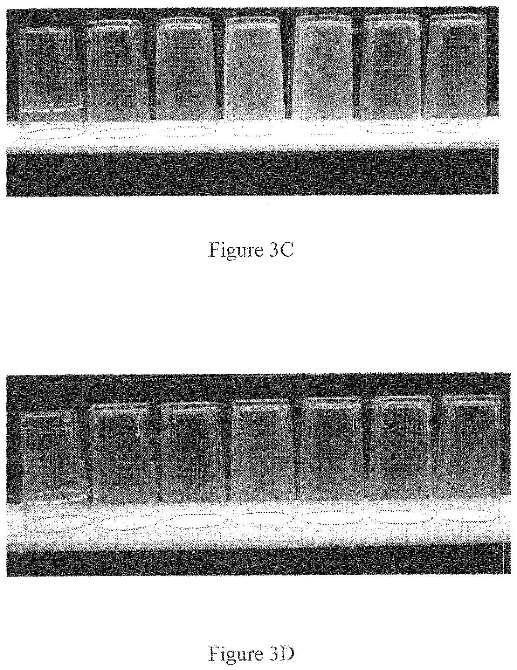

The glasses in Figure 3C were washed in untreated 17 Grain water using the detergent including builder, while those in the Figure 3D were washed in the same detergent but using treated water as described above with regard to Figure 3B. The glasses in the Figure 3C show a slight amount of scale, while the glasses in Figure 3D have no scale.

### Example 6

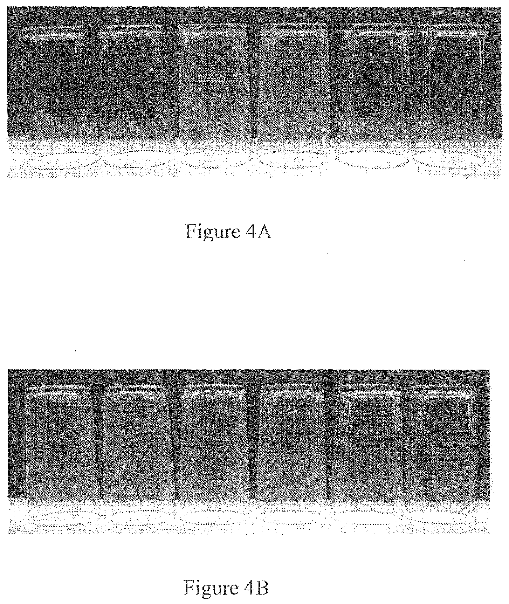

Three resin samples were prepared by loading them with H+, Ca++, and Mg++, according to the resin loading procedure described in example 1. Water was then treated with each of the resin samples and compared for scaling tendencies in a warewashing machine. The feedwater to the dishmachine was thus treated with a H+ weak acid cation resin, a Ca2+ weak acid cation resin, or a Mg2+ weak acid cation resin in three separate but equivalent tests. Each of the resin samples were first conditioned by running hard (17 gpg) water through a flow-through reservoir to drain. After approximately 1000 gallons of water flow, the resin/reservoir systems were connected to the dishmachine and evaluated for scaling tendencies on glassware. The results of this comparison test are shown in Figure 4A. After this dishmachine/glassware scaling test, the resin samples were further conditioned by running hard water through a flow-through reservoir to drain for an additional 4000 gallons and therefore each resin had treated a total of about 50(X) gallons of water. A second set of dishmachine/glassware scaling tests were then conducted, again without detergent and those results are shown in Figure 4B.

The control glasses (not shown) had heavy scale. The first two classes from the left in each Figure 4A and 4B were treated with H+ bound resin. The third and fourth glass from the left in each figure were treated with Ca2+ bound resin, and the fifth and sixth glass from the left in each figure were treated with a Mg2+ bound resin. As seen in Figure 4A, the H+ resin and the Mg2+ resin showed no visible scale in the test using resin that had previously treated 1000 gallons of water. The two Ca2+ resin showed a clearly visible scale. Referring to Figure 4B. in which each of the resin systems had previously treated 5000 gallons of water, the H+ resin resulted in a slight scale on the glassware. The Ca2+ resin showed a slightly heavier scale, and the Mg2+ resin showed little or no visible scale.

### Example 7

An experiment was performed to evaluate the effect of various water treatment apparatuses on the metal content remaining on a stainless steel surface after evaporation of whey permeate. Whey permeate collected from a dairy plant was used for this experiment. The water treatment apparatuses tested included resins with varying water treatment agents contained in a vessel. The following apparatuses were tested:

**Table 2**

| Apparatus Number: | Type |
|---|---|
| 1 | Control - 5 micron filter that holds in resin beads |
| 2 | A magnesium loaded weak acid cation resin that had previously treated 17 grain hard water. |
| 3 | A protonated weak acid cation resin that had not previously treated any water. |
| 4 | A magnesium loaded weak acid cation resin that had not previously treated any water. |
| 5 | A protonated weak acid cation resin rinsed with approximately 1000 milliliters of deionized (DI) water. |

For each resin, approximately 500 milliliters of permeate was placed in the resin container and shaken for about 30 seconds. The solutions where then allowed to drain through a resin support filter into a beaker. Then. 100 milliliters of each of the treated permeate was placed in separate stainless steel beakers. The beakers were then placed in a 190°F to 195°F water bath to initiate evaporation. After about 4.5 hours, the solutions turned into a thick syrup like solution which was assumed to be about 60-70% brix (60-70% sugar or other dissolved solids in solution).

The beakers were removed from the water bath and rinsed with DI water until the lactose sugary gel was removed, thereby leaving only mineral deposits. The beakers were then rinsed with a 2% acid solution to dissolve the mineral deposits. The acid used contained phosphoric acid, so the phosphoric acid values of the rinsed beakers were not considered meaningful in this experiment. The acid solutions and controls were then submitted for Inductively Coupled Plasma (ICP) testing for metal content. The tables below show the results of this study.

**Table 3**

| Treatment Apparatus Number | Resin Wt. (g) | Permeate Treated (ml) | Initial % Brix | After Treatment % Brix | Initial pH | After Treatment pH | Observations |
|---|---|---|---|---|---|---|---|
| Control - No Filtration | N/A | N/A | 6.3 | N/A | 5.43 | N/A | - Clear yellow solution |
| | | | | | | | - End of test after DI rinse, white mineral deposit remained. |
| 1 | N/A | 500 | 6.3 | 6.5 | 5.43 | 5.51 | Clear yellow solution |
| | | | | | | | - End of test after DI rinse, white mineral deposit remained |
| 2 | 250 | 500 | 6.3 | 6.1 | 5.13 | 6.40 | Clear yellow solution after contact with resin |
| | | | | | | | - Upon heating, a white precipitate formed immediately |
| | | | | | | | - End of test after DI rinse, beaker had slight bluing residue |
| 3 | 113 | 500 | 6.3 | 5.8 | 5.43 | 3.58 | - Cloudy and acidic after contact with resin |
| | | | | | | | -End of test after DI rinse, beaker looked clean |
| 4 | 300 | 458 | 6.3 | 5.3 | 5.13 | 9.68 | - Clear yellow solution after contact with resin |
| | | | | | | | - During evaporation process, solution tumed dark brown |
| | | | | | | | - End of test after DI rinse, beaker had slight bluing residue |
| 5 | 113 | 500 | 6.3 | 5.5 | 5.43 | 3.93 | - Cloudy and less acidic after contact with resin |
| | | | | | | | End of test after DI rinse, beaker looked clean. |

**Table 4**

| Treatment Apparatus Number | Ca (ppm) | Mg (ppm) | P (ppm) | Na (ppm) | Observations |
|---|---|---|---|---|---|
| 1 | 609 | 101 | 507 | 514 | Typical values for a raw permeate control |
| 2 | 269 | 553 | 358 | 311 | pH increased slightly from 5.4 to 6.4 |
| 3 | 310 | 70.5 | 476 | 391 | pH was much more acidic (3.6) after resin treatment |
| 4 | 6.05 | 73.6 | 371 | 2640 | pH after resin was very alkaline at 9.7 and brix dropped about 1 % |
| 5 | 287 | 67.5 | 436 | 384 | Final pH was still acidic at 3.9. Brix dropped about 0.8% after treatment. |

As can he seen from the above results, the whey treated with Apparatus 2. which contained a magnesium loaded weak acid cation resin, showed some decrease in the percent brix after treatment. This indicates a decrease in lactose, mineral and/or organic content in the treated sample.

Further, it was observed that the samples treated with resins containing magnesium (Apparatuses 2 and 4) had a decreased level of calcium remaining in the beaker. This decrease in calcium may be due to a reduced amount of calcium from the permeate.

Overall, it was found that the use of water treatment apparatuses according to embodiments of the present invention resulted in a reduction in the amount of calcium insoluble salts in this permeate evaporation test.

### Other Embodiments

It is to be understood that while the invention has been described in conjunction with the detailed description thereof, the foregoing description is intended to illustrate, and not limit the scope of the invention, which is defined by the scope of the appended claims. Other aspects, advantages, and modifications are within the scope of the following claims.

In addition, the contents of all patent publications discussed supra are incorporated in their entirety by this reference.

It is to be understood that wherever values and ranges are provided herein, all values and ranges encompassed by these values and ranges, are meant to be encompassed within the scope of the present invention. Moreover, all values that fall within these ranges, as well as the upper or lower limits of a range of values, are also contemplated by the present application.

## Claims

1. A method of treating a water source with a catalyst comprising:
a) preparing the catalyst by binding a water treatment agent, which is a source of magnesium ions, to a supporting material which is a weak acid cation resin by first converting the weak acid cation resin having a H⁺ ion attached to the active sites to a sodium form by soaking the resin in an excess of sodium hydroxide for 4 to 12 hours and then rinsing with water, and then converting the sodium form to a magnesium form by using MgCl₂ as soluble magnesium salt, and thereby binding the water treatment agent to the supporting material; and
b) contacting the water source with the catalyst to precipitate CaCO₃ out of the water source in the form of aragonite.

2. The method of claim 1, wherein the step of contacting comprises passing the water source through the catalyst.

3. The method of claim 1, further comprising agitating the catalyst.

4. The method of claim 1, wherein the supporting material comprises beads of resin.

5. The method of claim 1, wherein the supporting material is selected from the group consisting of an acrylic acid polymer, a methacrylic acid polymer, and combinations thereof.

6. The method of claim 1, wherein the catalyst is contained in a treatment reservoir.

7. The method of claim 1, wherein the treatment reservoir comprises a removable cartridge.

8. The method of claim 1, wherein the water to be treated is at a temperature of between 10°C and 90°C.

9. The method of claim 1, wherein the water to be treated has a pH of between 6 and 8.

10. The method of claim 1, wherein the water to be treated has a pH of greater than 8.

11. The method of claim 1, wherein the catalyst further comprises one or more oxides or hydroxides of magnesium, aluminum or titanium not bound to the supporting material.
